# EUROPÄISCHE PATENTSCHRIFT

(11) **EP 1 728 541 B1**
(45) Veröffentlichungstag und Bekanntmachung des Hinweises auf die Patenterteilung: **03.02.2010**
(21) Anmeldenummer: 06114807.8
(22) Anmeldetag: 01.06.2006
(51) Int. Cl.: B01D 27/08

(54) **Filterelement für einen Flüssigkeitsfilter**
Filter element for a liquid filter
ELEMENT FILTRANT POUR FILTRE A LIQUIDE

(30) Priorität: 01.06.2005 DE 202005008680 U
(43) Veröffentlichungstag der Anmeldung: 06.12.2006
(73) Patentinhaber: MANN+HUMMEL GmbH, 71638 Ludwigsburg (DE)
(72) Erfinder: Jokschas, Günter, 71540 Murrhardt (DE); Scherle, Uwe, 94419 Reisbach (DE); Franclik, Dusan, Trebic (CZ)

(56) Entgegenhaltungen:
- EP-A- 1 239 145
- EP-A- 1 504 801
- DE-A1- 10 246 151
- US-A- 2 834 469
- US-A- 5 858 227

## Beschreibung

### Technisches Gebiet

Die Erfindung betrifft ein Filterelement für einen Flüssigkeitsfilter gemäß dem Oberbegriff des Anspruchs 1.

### Stand der Technik

Derartige Filterelemente werden dort zur Reinigung von Flüssigkeiten eingesetzt, wo nur ein begrenzter Einbauraum zur Verfügung steht. Dazu sind die Filterelemente den räumlichen Bedingungen anzupassen. In der DE 44 44 943 ist beispielsweise ein hohlzylindrisches Kraftstofffilterelement in ein Filtergehäuse eingebaut. Dabei korrespondiert das Filterelement mit einem Filterkopf, an dem ein Einlass- und ein Auslassstutzen angeordnet sind. Der Kraftstoffauslassstutzen durchdringt die Endscheibe im Zentrum und ist dichtend und lösbar mit dieser verbunden. Der Kraftstoffeinlassstutzen ist außerhalb des Zentrums angeordnet. Nachteilig daran ist, dass ein Großteil der Oberfläche des Filterkopfes für die Anordnung der beiden Stutzen beansprucht wird. Die Anpassungsfähigkeit des Filterkopfes an begrenzte Raumverhältnisse ist deshalb nur sehr eingeschränkt möglich. Weiterhin bietet der Filterkopf selbst wenig Raum für die Befestigung von Zusatzelementen, wie beispielsweise - Sensoren oder Heizungsanschlüssen.

Aus der EP 1504801 ist ein Kraftstofffilter bekannt. Dieser besitzt elastisch verlängerte Stege zum axialen Festlegen eines Filtereinsatzes in einem Gehäuse. Das Gehäuse weist einen Gehäuseauslaß auf, wobei dieser radial außen angeordnet ist und einen Abstand zu einer exzentrisch angeordneten Öffnung der Endscheibe des Filtereinsatzes aufweist.

Aufgabe der Erfindung ist es, die oben genannten Nachteile zu vermeiden und ein Filterelement zu schaffen, welches in Flüssigkeitsfilter mit beengten Einbausituationen integriert werden kann und wirtschaftlich einfach herstellbar und monierbar ist.

Diese Aufgabe wird durch die Merkmale des Anspruches 1 erfüllt.

### Offenbarung der Erfindung

Das erfindungsgemäße Filterelement besteht aus einem im Wesentlichen ringförmigen, rotationssymmetrischen Filtermedium, welches an mindestens einer Stirnseite durch eine Endscheibe dichtend verschlossen ist. Zur Herstellung einer dichten Verbindung ist das Filtermedium mit der Endscheibe beispielsweise verschweißt, verklebt oder vulkanisiert. Dadurch trennt die Endscheibe eine außerhalb des Filtermediums liegende Außenseite von einer innerhalb des Filtermediums liegenden Innenseite. Die Endscheibe ist beispielsweise aus einem im Urformverfahren hergestellten Kunststoff gebildet und weist eine Öffnung auf, welche als Ein- oder Auslass für einen Flüssigkeitsstrom dient. Diese Öffnung ist erfindungsgemäß außerhalb der Symmetrieachse des Filterelementes angeordnet und kann sich bis direkt in den radialen Randbereich des Hohlzylinders erstrecken. In einem eingebauten Zustand korrespondiert die Öffnung mit einer Anschlusskontur eines Filtergehäuses bzw. eines Filterkopfes. Dies kann beispielsweise ein Rohrstutzen sein, der durch die Öffnung in die Endscheibe hineinragt. Vorteilhaft kann durch diese Anordnung ein großflächiger Raum im Zentrum des Filterelementes und dem damit korrespondierenden Filterkopf geschaffen werden. Dementsprechend können am Filterkopf zusätzliche Elemente befestigt werden, oder der Filterkopf kann besser in beengte Einbauräume integriert werden.

An der Endscheibe ist ein Rohrstutzen vorgesehen, der mit der Öffnung der Endscheibe korrespondiert. Der Rohrstutzen überragt die Endscheibe in deren Längsachse und ist zum Herstellen einer Verbindung mit der Anschlusskontur des Filterkopfes vorgesehen. Dieser Stutzen kann beispielsweise aus einem Thermoplast oder aus einem Elastomer gebildet sein und in die Öffnung der Endscheibe eingeknüpft, eingeschweißt, eingepasst oder eingeklebt werden. Es ist auch möglich, den Rohrstutzen einstückig mit der Endscheibe in einem Urformverfahren herzustellen. Zur Abdichtung können zwischen Filterkopf und Rohrstutzen Elastomerringe angeordnet werden. Zur Montage des Filterelementes wird der Rohrstutzen in eine am Filterkopf vorhandene Anschlusskontur eingesteckt, wodurch eine dichte Verbindung entsteht. Durch den an der Endscheibe angeordneten Rohrstutzen wird eine vorteilhaft einfache und zuverlässige Montage ermöglicht. Weiterhin wird die Gestaltung des korrespondierenden Filterkopfes vereinfacht.

Gemäß der Erfindung weist der Rohrstutzen ferner in seinem weiteren Verlauf einen radialen Versatz auf. Dadurch kann ein stirnseitiger Ansatz des Rohrstutzens gegenüber der Anschlusskontur radial bis in den Ringbereich des Filtermediums oder darüber hinaus gezogen werden. Die Anschlusskontur des Filterelementes kann dadurch noch weiter außerhalb des Zentrums angeordnet werden, wodurch sich die Anpassungsmöglichkeiten an die räumliche Einbausituation verbessern.

Eine vorteilhafte Gestaltungsvariante sieht vor, die Endscheibe aus mehreren Lagen herzustellen. Dabei kann beispielsweise eine Lage aus einem Elastomer bestehen, welches in die Stirnseite des Filtermediums eingebettet ist und diese dichtend verschließt. Diese erste Endscheibe schließt planflächig mit der Stirnseite des Filtermediums ab. An einer zweiten Endscheibe können die Öffnung und der Stutzen angeordnet werden, die zur Verbindung der Anschlusskontur des Filterelementes dienen. Die zweite Endscheibe kann beispielsweise aus einem Thermoplast, wie Polyamid oder Polypropylen, gebildet werden. An dieser zweiten Endscheibe können die Öffnung und der Stutzen angeordnet werden, der zur Verbindung der Anschlusskontur mit dem Filterkopf dient. Die beiden Endscheiben können dabei durch die bereits genannten Verfahren miteinander verbunden werden. Vorteilhaft werden dadurch die unterschiedlichen Materialeigenschaften der einzelnen Endscheiben genutzt. So kann beispielsweise ein elastisches Material zur zuverlässigen Abdichtung gegenüber dem Filtermedium und ein mechanisch starres Material zur Bildung des Rohrstutzens bzw. der Anschlussöffnung verwendet werden.

Gemäß einer vorteilhaften Ausbildung der Erfindung ist eine Endscheibe aus einem Thermoplast gebildet. Dazu sind beispielsweise Polyamid oder Polypropylen geeignet. Diese Materialien sind in den geforderten Geometrien einfach und wirtschaftlich herstellbar und weisen eine hohe chemische, thermische und mechanische Beständigkeit auf.

Eine weitere vorteilhafte Ausgestaltung verwendet harzverstärktes Kautschuk zur Bildung einer Endscheibe. Der harzverstärkte Kautschuk, wie beispielsweise Nitrilkautschuk, kann in die Stirnseite des Filtermediums einvulkanisiert werden. Zur Verbesserung der Haftfähigkeit und der Beständigkeit kann dem Kautschuk auch Epoxydharz oder Phenolharz beigemengt werden. Bei der eben beschriebenen Variante mit mehreren Endscheiben wird diese Verbindung zur zweiten Endscheibe durch den Vulkanisationsprozess erreicht. Dazu können an der zweiten Endscheibe Konturen oder Oberflächen gebildet sein, die eine Verkrallung mit der Kautschukendscheibe optimieren. Vorteilhaft wird durch die Kautschukendscheibe eine elastische, zuverlässige Verbindung zum Filtermedium ermöglicht, die wirtschaftlich einfach herstellbar ist und chemisch auch gegenüber Kraftstoffen, wie Benzin, Diesel und auch Rapsmethylester (RME) gegenüber beständig ist.

In einer weiteren vorteilhaften Ausführungsform sind an der Endscheibe Konturen angeordnet, die eine Zentrierung innerhalb des Filtergehäuses bewirken. Diese Konturen überragen die Endscheibe radial und/oder axial und stützen das Filterelement in eingebautem Zustand gegenüber einer Außenwand oder gegenüber einer korrespondierenden Führungskontur eines Filterkopfes ab. Diese Konturen können auch dergestalt dimensioniert sein, dass sie insbesondere gegenüber einem Filterkopf gleichzeitig eine axiale Abstützung bilden. Diese Gestaltungsweise ist deshalb besonders vorteilhaft, weil am erfindungsgemäßen Filterelement im Vergleich zu herkömmlichen Filterelementen keine zentrische Öffnung in der Endscheibe vorhanden ist. Die Konturen können derart ausgestaltet werden, dass sie gleichzeitig eine Montageerleichterung und eine axiale und radiale Abstützung des Filterelementes gewährleisten.

Das Filterelement kann in einem Kraftstofffilter angeordnet werden. Das Filterelement ist dabei in einem becherförmigen Gehäuse angeordnet, welches an einer offenen Stirnseite mit einem Filterkopf lösbar oder unlösbar verbunden ist. Der Filterkopf weist dabei eine als Kraftstoffauslass dienende Anschlusskontur aus, die mit der Öffnung des Filterelementes korrespondiert. Weiterhin ist am Filterkopf ein Kraftstoffeinlass angeordnet, durch den der Kraftstoff an die Außenseite des Filterelementes strömt. Sowohl der Kraftstoffeinlass als auch der Kraftstoffauslass können außerhalb des Zentrums des Filterkopfes angeordnet werden. Dadurch wird für die notwendigen Anschlüsse des Filterkopfes nur ein minimaler Raumbedarf benötigt, wodurch der Kraftstofffilter räumlich in beengten Einbausituationen untergebracht werden kann.

Gemäß einer vorteilhaften Ausgestaltung der Erfindung wird der am Filterkopf frei werdende Raum dazu genutzt, um mögliche Zusatzeinheiten direkt am Filterkopf anzubringen. Diese Zusatzeinheit kann beispielsweise eine Kraftstoffheizung, eine Sensorik oder ein Rücklaufanschluss sein.

Diese und weitere Merkmale von bevorzugten Weiterbildungen der Erfindung gehen außer aus den Ansprüchen auch aus der Beschreibung und den Zeichnungen hervor.

### Kurze Beschreibung der Zeichnungen

Ausführungsbeispiele der Erfindung werden in den Zeichnungen anhand von schematischen Darstellungen beschrieben.

Hierbei zeigen:

Figur 1 eine Kraftstofffiltereinheit mit dem erfindungsgemäßen Filterelement im Vollschnitt dargestellt,

Figur 2 eine perspektivische Darstellung des Kraftstofffilterelementes mit integrierter Zusatzeinheit,

Figur 3 eine Variante des Filterkopfes mit geänderten Anschlussstutzen und

Figur 4 eine abgeänderte Darstellung einer Variante des Filterelementes im Vollschnitt.

### Ausführungsform(en) der Erfindung

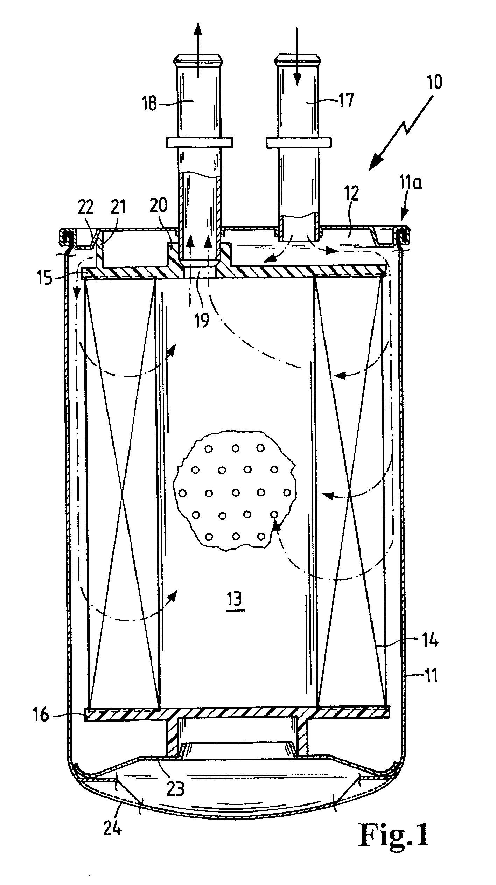

Figur 1 zeigt einen Kraftstofffilter 10, in welchem ein Filterelement 13 zwischen einem Filtertopf 11 und einem Filterkopf 12 angeordnet ist. Das Filterelement 13 besteht aus einem ringförmigen Filtermedium 14, welches an seinen beiden Stirnseiten durch eine offene Endscheibe 15 und eine geschlossene Endscheibe 16 dichtend verbunden ist. Der Filtertopf 11 ist mit dem Filterkopf 12 durch eine Bördelung dichtend verbunden. Der Filterkopf 12 weist einen Einlassstutzen 17 auf, durch welchen der Kraftstoff einströmt und im weiteren Verlauf durch einen Auslassstutzen 18 wieder aus dem Filterelement 13 ausströmt. Das Filtermedium 14 ist ringförmig und bildet im Zentrum einen hohlzylindrischen Raum. An der offenen Endscheibe 15 ist außerhalb des Zentrums eine Öffnung 19 angeordnet, durch die der gefilterte Kraftstoff in den Auslassstutzen 18 strömen kann. Konzentrisch zur Öffnung 19 weist die offene Endscheibe 15 einen Rohrstutzen 20 auf, der die Endscheibe 15 stirnseitig überragt. Dieser Rohrstutzen 20 korrespondiert mit dem Auslassstutzen 18 derart, dass der Auslassstutzen 18 in den Rohrstutzen 20 eingeschoben ist. Dadurch kann zwischen Rohrstutzen 20 und Auslassstutzen 18 eine dichte Verbindung hergestellt werden. Weiterhin weist die offene Endscheibe 15 mehrere Stützkonturen 21 auf, die das Filterelement 14 gegenüber einem anderen Filterkopf angeordneten Stützwulst 22 abstützen. Die Stützkonturen 21 sind stegförmig ausgebildet und weisen eine gewisse Elastizität auf, wodurch das Filterelement 14 gegenüber dem Filterkopf 12 in axialer Richtung abgestützt und in radialer Richtung zentriert werden kann. Um einen axialen Druck des Filterelementes 14 gegenüber dem Filterkopf 12 zu gewährleisten, ist zwischen dem Boden 24 des Topfes 11 und der geschlossenen Endscheibe 16 ein Federelement 23 angeordnet, welches vorzugsweise durch ein metallisches Federblech gebildet ist.

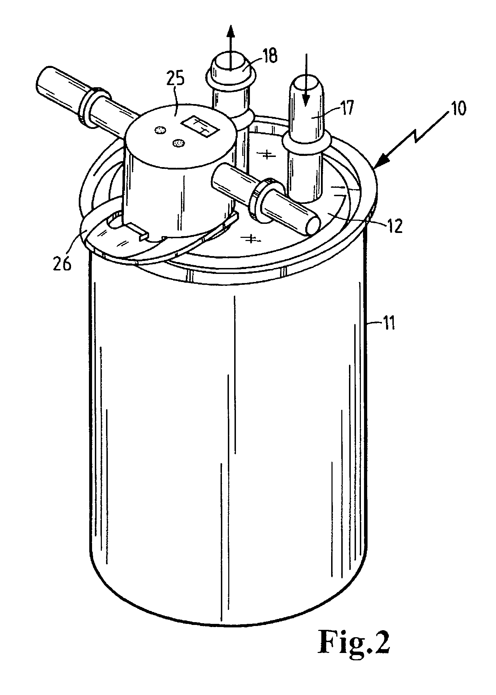

Figur 2 zeigt den Kraftstofffilter 10 in perspektivischer Darstellung. Der Figur 1 entsprechende Bauteile sind mit den gleichen Bezugszeichen versehen. Am Filterkopf 12 sind der Einlassstutzen 17 und der Auslassstutzen 18 deutlich sichtbar außerhalb des Zentrums angebracht. Der auf der Stirnfläche des Filterkopfes 12 zur Verfügung stehende Raum wird zur Anordnung eines Zusatzelementes 25 genutzt. Im gezeigten Beispiel ist das Zusatzelement 25 eine Kraftstoffheizung, welche mit dem Innenraum des Kraftstofffilters korrespondiert. Dieses Zusatzelement 25 ist durch eine Spange 26 lösbar mit dem Kraftstofffilter 10 befestigt und verbleibt im Wartungsfall am Fahrzeug bzw. wird an einem ausgetauschten Kraftstofffilter 10 neu befestigt.

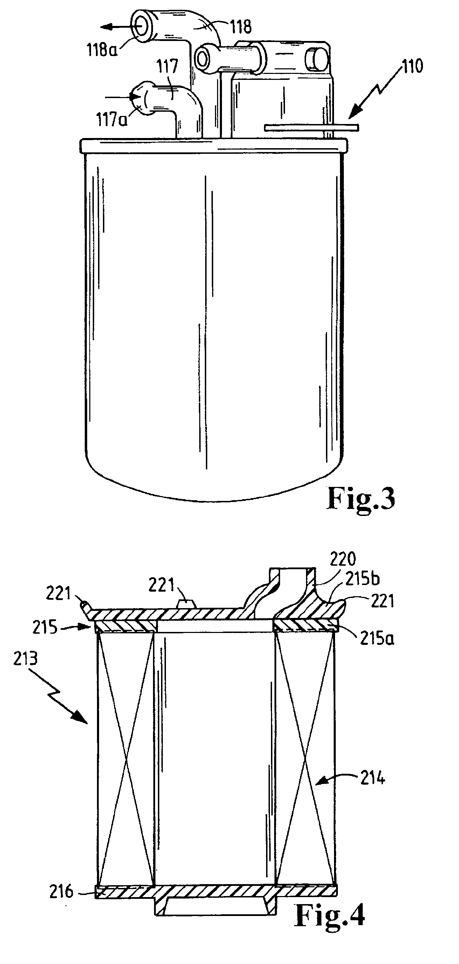

Figur 3 zeigt den Kraftstofffilter 110 mit geänderten Anschlussstutzen. Dabei sind der Einlassstutzen 117 und der Auslassstutzen 118 ca. 90° C zur Filterachse angewinkelt. An den Mündungen weisen diese beiden Stutzen 117, 118 Anschlusswülste 117a, 118a zur Verbindung mit nicht dargestellten Schlauchverbindungen auf.

Figur 4 ist eine weitere Ausführungsform eines hohlzylindrischen Filterelementes 213 schematisch im Vollschnitt dargestellt. Ein Filtermedium 214 ist dabei an seinen beiden Stirnseiten durch eine geschlossene Endscheibe 216 und eine offene Endscheibe 215 dichtend verbunden. Die offene Endscheibe 215 a/b besteht aus einer ersten Lage 215a, in der eine Stirnseite des Filtermediums 214 eingebettet ist. Diese erste Lage 215a ist fest und dichtend - beispielsweise durch Kleben oder Schweißen - mit der zweiten Lage 215b verbunden. Die zweite Lage 215b ist beispielsweise aus einem Thermoplast gebildet und weist gegenüber der ersten Lage 215a eine erhöhte Steifigkeit auf. Dies erlaubt es, an der zweiten Endscheibe 215b einen Rohrstutzen 220 anzuordnen, der in eingebautem Zustand mit einem Filterkopf (nicht dargestellt) korrespondiert. Weiterhin sind an der zweiten Lage 215b Stützkonturen angeordnet, die das Filtermedium 214 überragen und eine Zentrierung des Filterelementes 213 in einem Filtertopf (nicht dargestellt) bewirken und gleichzeitig eine axiale Abstützung gegenüber dem Filterkopf herstellen können.

## Patentansprüche

1. Filterelement für einen Flüssigkeitsfilter, mit einem im Wesentlichen ringförmigen, rotationssymmetrischen Filtermedium (214), welches zur stirnseitigen Abdichtung durch eine Endscheibe (215) verschlossen ist, wobei die Endscheibe (215) eine Öffnung aufweist, wobei durch die Endscheibe eine außerhalb des Filtermediums liegende Außenseite von einer innerhalb des Filtermediums liegenden Innenseite dichtend getrennt ist, wobei die Öffnung exzentrisch zur Symmetrieachse des Filtermediums angeordnet ist und an der Endscheibe ein Stutzen (220) vorgesehen ist, der mit der Öffnung korrespondiert und einen, von der Öffnung ausgehenden Strömungsquerschnitt weiterführt, **dadurch gekennzeichnet, dass** der Stutzen (220) das Filtermedium (214) axial überragt und im weiteren Verlauf einen radialen Versatz aufweist und Stützkonturen (221) vorgesehen sind, welche stegförmig ausgebildet sind und eine gewissen Elastizität aufweisen, wodurch das Filterelement gegenüber einem Filterkopf in axialer Richtung abgestützt und in radialer Richtung zentriert ist.

2. Filterelement nach Anspruch 1, **dadurch gekennzeichnet, dass** die Endscheibe (215) aus mehreren Lagen (215a, 215b) besteht.

3. Filterelement nach Anspruch 2, **dadurch gekennzeichnet, dass** wenigstens eine Endscheibe (215) aus einem Thermoplast gebildet ist.

4. Filterelement nach Anspruch 2 oder 3, **dadurch gekennzeichnet, dass** wenigstens eine Lage der Endscheibe (215) aus harzverstärktem Kautschuk gebildet ist.

5. Kraftstofffilter, aufweisend ein Filterelement gemäß einem der vorhergehenden Ansprüche, **dadurch gekennzeichnet, dass** das Filterelement innerhalb eines becherförmigen, mit einem Filterkopf (12) verbundenen Filtergehäuse angeordnet ist, wobei die Innenseite des Filtermediums (14) durch die an der Endscheibe (15) vorhandene Öffnung (19) mit einer Anschlusskontur des Filterkopfes korrespondiert.

6. Kraftstofffilter nach Anspruch 5, **dadurch gekennzeichnet, dass** am Filterkopf eine Zusatzeinheit (25) angeordnet ist, welche durch eine Funktionsöffnung mit der Außenseite des Filtermediums korrespondiert.

## Claims

1. Filter element for a liquid filter, with a basically ring-shaped, rotationally symmetric filter medium (214) which is closed for a frontal sealing by an end plate (215), the end plate (215) featuring an opening, an exterior side located outside of the filter medium being sealingly separated from an interior side located inside of the filter medium by the end plate, the opening being located eccentrically in relation to the axis of symmetry of the filter medium and a connecting piece (220) being provided at the end plate, which corresponds with the opening and extends a flow cross-section that begins at the opening, **characterized in that** the connecting piece (220) protrudes the filter medium (214) axially and features a radial offset in the extension and that supporting contours (221) are provided which have a web-like design and feature a certain elasticity, thus the filter element is supported opposite to a filter head in axial direction and centered in radial direction.

2. Filter element according to claim 1, **characterized in that** the end plate (215) consists of several layers (215a, 215b).

3. Filter element according to claim 2, **characterized in that** at least one end plate (215) is made of a thermoplastic material.

4. Filter element according to claim 2 or 3, **characterized in that** at least one layer of the end plate (215) is made of resin-reinforced rubber.

5. Fuel filter, featuring a filter element according to one of the above-mentioned claims, **characterized in that** the filter element is located within a cup-shaped filter housing connected with a filter head (12), the interior side of the filter medium (14) corresponding with a connection contour of the filter head through the opening (19) at the end plate (15).

6. Fuel filter according to claim 5, **characterized in that** an additional unit (25) which corresponds with the exterior side of the filter medium through a functional opening is located at the filter head.

## Revendications

1. Elément filtrant pour un filtre à liquide avec un milieu filtrant essentiellement annulaire et à rotation symétrique (214), fermé par une plaque d'extrémité (215) en vue de l'étanchéité frontale, la plaque d'extrémité (215) présentant une ouverture et assurant la séparation étanche entre une face extérieure située hors du milieu filtrant et une face intérieure située dans le milieu filtrant, l'ouverture étant disposée de manière excentrique par rapport à l'axe de symétrie du milieu filtrant et un raccord (220) correspondant avec l'ouverture et prolongeant une section de flux partant de l'ouverture étant prévu sur le plaque d'extrémité, **caractérisé en ce que** le raccord (220) dépasse du milieu filtrant (214) en sens axial et présente un déport radial dans le prolongement et que des contours d'appui (221) sont prévus qui sont réalisés en forme de nervures et font preuve d'une certaine élasticité, ayant pour conséquence que l'élément filtrant est appuyé en sens axial en face d'une tête de filtre et est centré en sens radial.

2. Elément filtrant selon la revendication 1, **caractérisé en ce que** la plaque d'extrémité (215) se compose de plusieurs couches (215a, 215b).

3. Elément filtrant selon la revendication 2, **caractérisé en ce qu'**au moins une plaque d'extrémité (215) est réalisée dans une matière thermoplastique.

4. Elément filtrant selon la revendication 2 ou 3, **caractérisé en ce qu'**au moins une couche de la plaque d'extrémité (215) est réalisée dans un caoutchouc renforcé par des résines.

5. Filtre à carburant, présentant un élément filtrant selon l'une des revendications précédentes, **caractérisé en ce que** l'élément filtrant est disposé à l'intérieur d'un boîtier de filtre en forme de godet et relié à une tête de filtre (12), la face intérieure du milieu filtrant (14) correspondant, par l'ouverture (19) existant sur la plaque d'extrémité (15), avec un contour de raccordement de la tête de filtre.

6. Filtre à carburant selon la revendication 5, **caractérisé en ce qu'**une unité supplémentaire (25) qui correspond, par une ouverture fonctionnelle, avec la face extérieure du milieu filtrant est disposée sur la tête de filtre.
